Europäisches Patentamt

European Patent Office

Office européen des brevets

(19)

(11) Numéro de publication : **0 112 219**
**B1**

(12) **FASCICULE DE BREVET EUROPÉEN**

(45) Date de publication du fascicule du brevet :
**05.03.86**

(51) Int. Cl.⁴ : **C 10 L   1/18**, C 10 L   1/24,
C 07 F  15/00

(21) Numéro de dépôt : **83402286.5**

(22) Date de dépôt : **28.11.83**

(54) Compositions organométalliques mixtes comprenant des éléments du groupe des lanthanides et du manganèse ou des éléments du groupe du fer, procédé de préparation et applications desdites compositions comme additifs pour combustibles ou carburants.

(30) Priorité : **10.12.82 FR 8220783**

(43) Date de publication de la demande :
**27.06.84 Bulletin 84/26**

(45) Mention de la délivrance du brevet :
**05.03.86 Bulletin 86/10**

(84) Etats contractants désignés :
**AT BE CH DE FR GB IT LI NL SE**

(56) Documents cités :
**FR-A-   823 791**
**FR-A- 2 359 192**
**FR-A- 2 453 844**
**FR-A- 2 476 645**

(73) Titulaire : **COMPAGNIE FRANCAISE DE RAFFINAGE**
Société anonyme dite:
**5, rue Michel-Ange**
**F-75781 Paris Cedex 16 (FR)**

**GAMLEN EUROPE S.A.**
**62-70 rue Yvan Tourgueneff**
**F-78380 Bougival (FR)**

(72) Inventeur : **Brisset, Guy**
**16 rue des Sitelles Saint Just**
**F-27200 Vernon (FR)**
Inventeur : **Mas, Michel**
**47 rue de Fontenay**
**F-78200 Magnanville (FR)**
Inventeur : **Muller, Alain**
**19, rue du Vieux Château**
**F-69340 Francheville le Bas (FR)**
Inventeur : **Peyrot, Jean**
**25, rue des Gobelins**
**F-76600 Le Havre (FR)**

(74) Mandataire : **Jolly, Jean-Pierre et al**
**Cabinet BROT et JOLLY 83, rue d'Amsterdam**
**F-75008 Paris (FR)**

## Description

La présente invention concerne des compositions organo-métalliques mixtes comprenant des éléments du groupe des lanthanides et du manganèse ou des éléments du groupe du fer. Elle concerne également un procédé de préparation de ces compositions et leur application comme additifs de combustion de combustibles ou de carburants liquides, tels que les fiouls ou les gazoles.

Il est déjà connu d'utiliser des sels organiques de fer, comme additifs de combustion de combustibles ou carburants liquides, constitués d'un sel complexe d'un acide organique et de fer dans lequel le rapport du nombre d'équivalents d'acide organique au nombre d'atomes de fer est inférieur à 3 et, plus précisément, compris entre 1/3 et 3 (voir ainsi le brevet français n° 2 172 797 déposé au nom de l'une des Demanderesses). Ce brevet concerne des compositions organométalliques de fer en solution concentrée (jusqu'à 300 g/l de métal), peu coûteuses, présentant une faible viscosité et faciles à manipuler, stocker et transporter.

Par le terme « nombre d'équivalents d'acide », il faut entendre le nombre de molécules d'acide lorsque l'acide utilisé est monofonctionnel, et il faut doubler ou tripler ce nombre, dans le cas de di ou tri acides, et plus généralement le multiplier par le nombre de fonctions acides.

Il est également connu d'utiliser des sels organiques du manganèse dans lesquels le rapport du nombre d'équivalents d'acide au nombre d'atomes de manganèse est inférieur à 2 (voir le brevet français n° 2 486 083 déposé au nom de la même Demanderesse).

L'art antérieur décrit également des sels d'acide organique préparés à partir de terres rares, notamment le cérium, utiles comme adjuvants de combustion, dans lesquels le rapport du nombre d'équivalents d'acide au nombre d'atomes de cérium est inférieur aux valeurs stœchiométriques normales et, plus précisément, compris entre 0,2 et 1 (voir le brevet français n° 2 359 192 déposé également au nom de la même Demanderesse). Ces composés ont l'avantage d'être hautement concentrés en cérium (jusqu'à 800 g/l), de coût plus intéressant que les sels d'acide gras « stœchiométriques » et, de plus, de caractéristiques de viscosité restant compatibles avec une mise en œuvre aisée.

Le dopage des combustibles avec ces types de produit permet principalement de réduire la quantité d'imbrûlés solides formés au cours de la combustion.

En particulier, les combustibles liquides dans lesquels ont été incorporés des sels de cérium identiques à ceux décrits ci-dessus présentent une qualité de combustion nettement améliorée, même dans le cas où cette combustion s'effectue avec de faibles excès d'air (inférieurs à 1 % d'oxygène), pour lesquels l'action des sels de fer, bien que suffisante, ne permet pas d'obtenir des résultats optima.

Toutefois, malgré la diminution du coût de l'emploi des sels organométalliques de cérium, rendue possible par l'utilisation d'une quantité d'acide gras plus faible que la stœchiométrie, ces produits restent relativement onéreux, du fait du prix élevé des sels minéraux de terres rares (plus de huit fois supérieur au prix du fer, calculé en métal).

La présente invention vise à proposer des composés organométalliques mixtes de synthèse, dont l'efficacité en tant qu'adjuvant de combustion, à teneur globale en métal identique, est au moins équivalente aux sels de cérium seuls et dont le coût est très sensiblement réduit par rapport à ces mêmes sels.

La présente invention a donc pour objet des compositions organométalliques mixtes caractérisées en ce qu'elles comprennent des sels d'acides organiques d'au moins un métal du groupe des lanthanides et d'au moins un métal choisi dans le groupe constitué par le manganèse et les métaux du groupe du fer, et dans lesquelles le rapport du nombre total d'atomes de métal au nombre d'équivalents d'acide organique est supérieur à la valeur stœchiométrique et, de préférence, supérieur à 2.

Dans cette définition de l'objet de l'invention et dans la suite de la présente description, on entend par élément du groupe du fer, un élément choisi dans le groupe consitué par le fer, le cobalt et le nickel.

Le fer est l'élément préféré, en raison de son coût peu élevé, mais l'utilisation de cobalt ou de nickel peut être envisagée, notamment en combinaison avec le fer.

Les lanthanides peuvent être utilisés seuls ou en mélange. Leur obtention pure étant plus difficile, des mélanges « naturels » peuvent être envisagés.

Dans la composition, le lanthanide est utilisé de préférence à un degré d'oxydation 3, bien qu'il puisse être utilisé également à un degré d'oxydation 4, lorsque celui-ci existe.

Le lanthanide préféré est le cérium, bien que le lanthane, le néodyme et le praséodyme puissent être utilisés avec succès également.

Les proportions relatives du lanthanide et du manganèse ou de l'élément du groupe du fer peuvent varier en fonction du coût final du produit que l'on désire ne pas dépasser et des performances que l'on veut obtenir.

Les compositions selon l'invention comprennent, de préférence, de 20 à 85 % en poids du métal du groupe du fer ou du manganèse, rapporté au poids total des métaux, et de 80 à 15 % en poids de lanthanide.

Selon une caractéristique de la présente invention, l'acide organique entrant dans les compositions selon l'invention peut être choisi parmi les acides gras ayant plus de 7 atomes de carbone, les acides alcoyl, aryl ou alcoylaryl sulfoniques et les acides carboxyliques à chaîne alcoylaryle comportant plus de 8 atomes de carbone. Les compositions peuvent contenir un ou plusieurs acides en mélange.

0 112 219

Les dérivés organométalliques des lanthanides et des éléments du groupe du fer sont préparés selon un procédé qui constitue un autre objet de la présente invention. Ce procédé consiste à faire réagir, en milieu organique, l'acide organique ou un de ses dérivés, notamment un de ses sels alcalins, soit avec un mélange de sels hydrosolubles des métaux, lesquels sont coprécipités à l'état d'hydroxyde par une base forte telle que la soude, la potasse ou l'ammoniaque, soit successivement avec les hydroxydes des métaux obtenus par précipitation séparée des sels correspondants. On utilise généralement un rapport du nombre total d'atomes de métal au nombre d'équivalents d'acide organique supérieur à 3, pouvant aller jusqu'à 9, mais, de préférence, compris entre 3 et 6. La réaction s'effectue de préférence en chauffant le milieu réactionnel et en maintenant celui-ci sous bonne agitation.

La séparation de l'eau issue du milieu réactionnel peut, après réaction, être facilitée par l'ajout d'un tiers solvant tel que le glycol, un alcool ou un alcoylglycol. Les concentrations en métaux des solutions organométalliques préparées sont fonction de la quantité d'hydrocarbure utilisée en tant que solvant de l'acide organique.

Les composés du manganèse et des lanthanides peuvent être obtenus en faisant réagir successivement l'acide organique ou un de ses dérivés, sur l'hydroxyde de manganèse en milieu ammoniacal, puis sur l'hydroxyde de lanthanide obtenu par précipitation par une base forte de sel correspondant, le rapport atomes de métal/équivalents d'acide étant compris entre 2 et 8 et, de préférence, entre 2 et 4.

Un autre intérêt de l'invention est d'obtenir des solutions à haute concentration en métaux, pouvant aller jusqu'à 300 g/l dans le cas des composés du fer et 350 g/l dans le cas des composés du manganèse, qui restent fluides et peuvent être mises en œuvre facilement dans le combustible.

Ces différentes compositions peuvent être ajoutées, selon leur concentration, en proportions adéquates aux combustibles ou carburants liquides, de manière que ceux-ci contiennent entre 10 et 100 ppm de métal. Elles permettent de réduire la quantité d'imbrûlés solides engendrés par une combustion incomplète, quels que soient les excès d'air utilisés et, principalement, lorsque ces excès d'air sont faibles.

Les exemples ci-après sont destinés à illustrer l'invention de façon non limitative.

Exemples

Ces exemples concernent la préparation de compositions selon l'invention et leur utilisation dans des essais de combustion.

Les essais de combustion qui ont permis de mettre en évidence l'efficacité des composés faisant l'objet de la présente invention, ont été réalisés sur une installation et avec un combustible présentant les caractéristiques suivantes :

1) Installation thermique et paramètres de combustion

- Chaudière : 1 200 KW,
- Type de brûleur : pulvérisation mécanique à retour,
- Viscosité du fioul au brûleur : 15 centistokes,
- Pression du fioul : 25 bars,
- Débit : 100 kg/h,
- Variation d'excès d'air : 1 à 10 % de 0.

2) Combustible

- Fioul lourd n° 2
- Soufre (% en poids) : 3,90 (mesuré par dosage chimique),
- Asphaltènes (% en poids) : 6,5 (selon norme AFNOR NFT n° 60-115),
- Masse volumique à 15 °C : 1,006 (selon norme AFNOR NFT n° 60-101),
- Viscosité : 40 cst à 100 °C (selon norme AFNOR NFT n° 60-100),
- Indice Conradson : 15 (selon norme AFNOR NFT n° 60-116).

Les mesures d'imbrûlés solides ont été effectuées suivant la norme NF X 44 052.

Exemple 1

1 165 g d'une solution de chlorure ferrique à 42,5 degrés Baumé et 171 g de nitrate céreux pentahydraté sont précipités sous forme d'hydroxydes par addition d'ammoniaque jusqu'à un pH égal à 8.

Le précipité résultant est lavé à l'eau jusqu'à disparition des anions $NO_3^-$ et $Cl^-$, puis est mis à réagir avec 245 g d'acide oléique et 560 cm$^3$ de white spirit. Le milieu réactionnel est porté à 90 °C et maintenu sous bonne agitation à cette température pendant 3 heures. On ajoute alors 120 g de l'éther éthylique de l'éthylèneglycol pour assurer la séparation de l'eau à la partie inférieure.

Les dernières traces d'eau, dans la solution organique obtenue, sont éliminées par distillation

3

atmosphérique. La solution organique a une teneur en métal de 230 g/l, qui est constituée de 173 g/l de fer et de 57 g/l de cérium. Le rapport atomes de métal/nombre d'équivalents d'acide est égal à 4.

Cette solution est ajoutée à du fioul lourd alimentant la chaudière décrite ci-dessus, de telle manière que le combustible contienne 35 ppm de métal. L'étude est menée en comparaison avec deux autres traitements, l'un avec un oléate de fer, l'autre avec un oléate de cérium (préparés suivant les brevets cités plus haut). Les taux d'émission de particules relevés dans les gaz de combustion (exprimés en mg/m³ de fumée) sont donnés dans le Tableau I ci-après :

(Voir tableau I, page 5)

Tableau I

| Additif utilisé | Concentration d'additif utilisée | Taux de particules | | |
|---|---|---|---|---|
| | | avec 1 % d'oxygène de combustion | avec 2 % d'oxygène de combustion | avec 5 % d'oxygène de ·combustion |
| 0 | 0 | 1 180 | 960 | 660 |
| Oléate de fer | 35 ppm de fer | 1 010 | 800 | 470 |
| Oléate de cérium | 35 ppm de cérium | 820 | 640 | 380 |
| Oléate de fer-cérium | 26 ppm de fer 9 ppm de cérium | 750 | 620 | 300 |

La diminution de la quantité d'imbrûlés obtenue avec le produit de la présente invention est supérieure à celle obtenue avec des sels de cérium ou de fer purs.

Cet exemple montre donc que des compositions mixtes au fer et au cérium selon l'invention donnent, de façon inattendue, des résultats meilleurs, à fort et faible excès d'air, que des compositions au fer ou au cérium.

## Exemple 2

Dans 700 cm³ d'un gazole, on verse, sous agitation, 120 g d'un mélange d'acides gras connu sous le nom de tall oil, puis 180 g d'hydroxyde ferrique fraîchement précipité et lavé, contenant environ 15 % d'humidité. Le milieu réactionnel est porté à 80 °C pendant 2 heures, puis refroidi à température ambiante.

Indépendamment, 180 g de chlorure céreux hydraté ($6H_2O$) sont dissous dans 200 cm³ d'eau et l'hydroxyde correspondant est précipité par l'ammoniaque jusqu'à un pH de 8, filtré et lavé jusqu'à disparition des ions $Cl^-$ et $NH_4^+$.

Cet hydroxyde est ajouté progressivement sous agitation au milieu réactionnel précédent et la température est élevée et maintenue à 90 °C pendant 3 heures. L'addition de 30 g d'éther isopropylique de l'éthylèneglycol permet de séparer l'eau de la phase organique et celle-ci est ensuite purifiée par distillation.

Le produit résultant contient 150 g/l de métal dont 80 g/l de fer et 70 g/l de cérium. Il présente un rapport atome de métal/acide gras de 5,2 et se dilue parfaitement dans les hydrocarbures lourds ou légers.

Les résultats obtenus avec ce produit en tant que catalyseur de combustion sont sensiblement identiques à ceux donnés pour le produit décrit dans l'Exemple 1.

## Exemple 3

On suit la méthode utilisée dans l'Exemple 1 en remplaçant les 171 g de nitrate céreux pentahydraté par le même poids de sulfate cérique tétrahydraté.

Le produit obtenu contient 170 g/l de fer et 59,5 g/l de cérium et le rapport atomes de métal/acide gras est égal à 3,95.

Les résultats techniques de ce produit sont identiques à ceux donnés pour le produit décrit dans l'Exemple 1.

## Exemple 4

A partir d'un mélange de 590 g de sulfate cérique tétrahydraté et 460 g d'une solution de chlorure ferrique à 45,2° Baumé, les hydroxydes de fer et de cérium sont coprécipités par addition d'ammoniaque jusqu'à pH = 7,5. Après lavage, le mélange est ajouté, sous bonne agitation et à température ambiante, à une solution organique constituée de 185 g d'acide dodécylbenzène sulfonique et de 750 cm³ de white spirit. Le milieu réactionnel est chauffé à 90 °C et maintenu à cette température pendant 4 heures, avant que l'eau de constitution et de réaction soit éliminée par distillation atmosphérique, la température étant portée jusqu'à 150 °C.

La solution organique obtenue contient 272 g/l de métal dont 204 g/l de cérium et 68 g/l de fer. Le rapport métal/acide est égal à 4,8.

Ce produit, ajouté à du fioul lourd à raison de 35 ppm de métal (26 ppm Ce et 9 ppm Fe) dans les conditions décrites dans l'Exemple 1, donne les résultats figurant dans le Tableau II ci-après.

(Voir tableau II page 7)

6

Tableau II

| Additif utilisé | Concentration d'additif utilisée | Taux de particules | | |
|---|---|---|---|---|
| | | avec 1 % d'oxygène de combustion | avec 2 % d'oxygène de combustion | avec 5 % d'oxygène de combustion |
| 0 | 0 | 1 180 | 960 | 660 |
| Sulfonate de fer-cérium | 26 ppm de fer<br>9 ppm de cérium | 800 | 640 | 350 |

Ce tableau montre l'efficacité des compositions selon l'invention.

0 112 219

## Exemple 5

Sous agitation, 130 g de chlorure de lanthane heptahydraté et 390 g de chlorure ferrique anhydre sont dissous dans 1 litre d'eau. On ajoute alors une solution d'ammoniaque à 20 % jusqu'à l'obtention d'un pH de 8,5. Le précipité obtenu est filtré, lavé, puis incorporé dans un mélange de 205 g d'acide linoléique dissous dans 720 cm³ de gazole. Le milieu réactionnel est chauffé à 90 °C pendant 4 heures. Après réaction, la séparation de la phase organique et de la phase aqueuse est facilitée par l'ajout de 40 g de l'éther butylique de l'éthylèneglycol. Le complexe organique obtenu, de couleur rougeâtre, est ensuite purifié.

Il présente une teneur en métal de 180 g/l, dont 133 g de fer et 47 g de lanthane. Il se dilue très bien dans les hydrocarbures et le rapport métal/acide gras est égal à 4,1.

## Exemple 6

On opère comme dans l'Exemple 5, mais on remplace les 130 g de chlorure de lanthane par 142 g d'acétate de néodyme monohydraté. Le produit obtenu contient 195 g/l de métal, dont 135 g/l de fer et 60 g/l de néodyme. Le rapport métal/acide est égal à 4,3.

## Exemple 7

On dissout 260 g d'acide oléique technique (d'indice d'acide 193 mesuré selon la norme AFNOR T66-013), dans 750 cm³ de white spirit. On ajoute ensuite en agitant, successivement, 870 g d'acétate de manganèse tétrahydraté et 1 200 cm³ d'ammoniaque à 20° Baumé. La température du milieu réactionnel est d'environ 45 °C en fin d'addition.

Le milieu réactionnel est porté à 55 °C sous agitation énergique pendant 5 heures, puis à 85 °C, pour briser l'émulsion formée entre les phases organique et aqueuse. L'eau décantée est séparée du milieu réactionnel.

On disperse dans la phase organique l'hydroxyde céreux obtenu par précipitation par l'ammoniaque à partir de 160 g de nitrate céreux, filtration et lavage à l'eau. Le milieu réactionnel est porté à 90 °C sous agitation énergique pendant 2 heures. L'eau est éliminée par décantation et évaporation. On obtient une solution organique dont la teneur en métal est de 203 g/litre, contenant 160 g/litre de manganèse et 43 g/litre de cérium. Le rapport atomes de métal/nombre d'équivalents d'acide est de 3,2.

On ajoute la solution à du fioul lourd alimentant la chaudière décrite précédemment, en quantité telle que le combustible contienne 35 ppm de métal. L'étude est menée en comparaison avec deux autres traitements, l'un avec un oléate de manganèse, l'autre avec un oléate de cérium. Les taux d'émission de particules relevés dans les gaz de combustion (exprimés en mg/m³ de fumée) sont donnés dans le Tableau III ci-après.

(Voir tableau III page 9)

Tableau III

| Additif utilisé | Concentration d'additif utilisée | Taux de particules | | |
|---|---|---|---|---|
| | | avec 1 % d'oxygène de combustion | avec 2 % d'oxygène de combustion | avec 5 % d'oxygène de combustion |
| 0 | 0 | 1 180 | 960 | 660 |
| Oléate de manganèse | 35 ppm de manganèse | 990 | 800 | 480 |
| Oléate de cérium | 35 ppm de cérium | 820 | 640 | 380 |
| Oléate de manganèse-cérium | 28 ppm de manganèse 7 ppm de cérium | 740 | 600 | 350 |

La diminution de la quantité d'imbrûlés obtenue avec le produit de la présente invention est supérieure à celle obtenue avec des sels de cérium ou de manganèse purs.

Cet exemple montre donc que des compositions mixtes au manganèse et au cérium selon l'invention donnent, de façon inattendue, des résultats meilleurs, à fort et à faible excès d'air, que des compositions au manganèse et au cérium.

**Revendications**

1. Compositions organométalliques mixtes, caractérisées en ce qu'elles comprennent des sels d'acides organiques d'au moins un métal du groupe des lanthanides et d'au moins un métal choisi dans le groupe constitué par le manganèse, le fer, le cobalt et le nickel, et dans lesquelles le rapport du nombre total d'atomes de métal au nombre d'équivalents d'acide organique est supérieur à la valeur stœchiométrique et, de préférence, supérieur à 2.

2. Compositions selon la revendication 1, caractérisées en ce que le métal est le fer,

3. Compositions selon l'une des revendications 1 et 2, caractérisées en ce que le métal du groupe des lanthanides est choisi dans le groupe constitué par le cérium, le lanthane, le néodyme et le praséodyme.

4. Compositions selon l'une des revendications 1 à 3, caractérisées en ce que le métal du groupe des lanthanides est le cérium.

5. Compositions selon l'une des revendications 1 à 4, caractérisées en ce qu'elles comprennent, rapportées au poids total des métaux, de 20 à 85 % en poids du métal du groupe constitué par le fer, le cobalt et le nickel et de 80 à 15 % en poids du métal du groupe des lanthanides.

6. Compositions selon l'une des revendications 1 à 5, caractérisées en ce que l'acide organique est choisi dans le groupe constitué par les acides gras ayant plus de 7 atomes de carbone, les acides alcoyl, aryl ou alcoylaryl sulfoniques et les acides carboxyliques à chaîne alcoylaryle comportant plus de 8 atomes de carbone.

7. Procédé de préparation de compositions organométalliques mixtes comprenant des sels d'acides organiques d'au moins un métal du groupe constitué par le fer, le cobalt et le nickel et d'au moins un métal du groupe des lanthanides, caractérisé en ce que l'on fait réagir en milieu organique l'acide organique, ou un de ses dérivés, soit sur un mélange d'hydroxydes des métaux des groupes du fer et des lanthanides obtenu par coprécipitation, soit successivement sur les hydroxydes de ces métaux obtenus par précipitation séparée.

8. Procédé selon la revendication 7, caractérisé en ce que le rapport total d'atomes de métal au nombre d'équivalents d'acide organique est compris entre 3 et 9 et, de préférence, entre 3 et 6.

9. Procédé selon l'une des revendications 7 et 8, caractérisé en ce que la séparation de l'eau issue du milieu réactionnel est facilitée par l'ajout d'un tiers solvant tel que le glycol, un alcool et un alcoylglycol.

10. Compositions organométalliques mixtes comprenant des sels d'acides organiques d'au moins un métal du groupe constitué par le fer, le cobalt et le nickel et d'au moins un métal du groupe des lanthanides préparées par un procédé consistant à faire réagir en milieu organique l'acide organique, ou un de ses dérivés, soit sur un mélange d'hydroxydes des métaux des groupes constitué par le fer, le cobalt ou le nickel et des lanthanides obtenu par coprécipitation, soit successivement sur les hydroxydes de ces métaux obtenus par précipitation séparée.

11. Procédé de préparation de compositions organométalliques mixtes comprenant des sels d'acide organique d'au moins un lanthanide et du manganèse, caractérisé en ce que l'on fait réagir successivement l'acide organique, ou un de ses dérivés, sur l'hydroxyde de manganèse en milieu ammoniacal, puis sur l'hydroxyde de lanthanide.

12. Procédé selon la revendication 11, caractérisé en ce que le rapport total d'atomes du métal au nombre d'équivalents d'acide organique est compris entre 2 et 8 et, de préférence, entre 2 et 4.

13. Compositions organométalliques mixtes comprenant des sels d'acide organique d'au moins un lanthanide et du manganèse préparées par un procédé consistant à faire réagir l'acide organique, ou un de ses dérivés, sur l'hydroxyde de manganèse en milieu ammoniacal, puis sur l'hydroxyde de lanthanide.

14. Compositions obtenues par un procédé selon l'un des revendications 7 à 9 et 11 à 13.

15. Application des compositions selon l'une des revendications 1 à 6, 10, 13 et 14, comme additifs pour combustibles ou carburants.

16. Application selon la revendication 15, caractérisée en ce que la composition est utilisée à une concentration de 10 à 100 ppm de métal.

**Claims**

1. Mixed organo-metallic compositions, characterised in that they comprise salts of organic acids of at least one metal of the group of the lanthanides and of at least one metal selected from the group comprising manganese, iron, cobalt and nickel, and in which the ratio of the total number of atoms of metal to the number of organic acid equivalents is higher than the stoichiometric value and, preferably, higher than 2.

2. Compositions according to Claim 1, characterised in that the metal is iron.

3. Compositions according to either of Claims 1 and 2, characterised in that the metal of the group of the lanthanides is selected from the group comprising cerium, lanthanum, neodymium and praseodymium.

4. Compositions according to one of Claims 1 to 3, characterised in that the metal of the group of the lanthanides is cerium.

5. Compositions according to one of Claims 1 to 4, characterised in that, in relation to the total weight of metals, they comprise from 20 to 85 % by weight of metal of the group comprising iron, cobalt and nickel and from 80 to 15 % by weight of metal of the group of the lanthanides.

6. Compositions according to one of Claims 1 to 5, characterised in that the organic acid is selected from the group comprising fatty acids having more than 7 carbon atoms, alkyl, aryl or alkylaryl sulphonic acids and carboxylic acids with an alkylaryl chain having more than 8 carbon atoms.

7. A method for the preparation of mixed organometallic compositions comprising salts of organic acids of at least one metal of the group comprising iron, cobalt and nickel, and of at least one metal of the group of the lanthanides, characterised in that the organic acid, or one of its derivatives, is caused to react in an organic medium either over a mixture of hydroxides of metals of the groups of iron and the lanthanides, obtained by coprecipitation, or successively over the hydroxides of these metals obtained by separate precipitation.

8. A method according to Claim 7, characterised in that the total ratio of atoms of metal to the number of organic acid equivalents is between 3 and 9 and, preferably, between 3 and 6.

9. A method according to either of Claims 7 and 8, characterised in that the separation of the water originating from the reaction medium is facilitated by the addition of a third solvent, such as glycol, an alcohol and an alkyl glycol.

10. Mixed organo-metallic compositions comprising salts of organic acids of at least one metal of the group comprising iron, cobalt and nickel, and of at least one metal of the group of the lanthanides, prepared by a method wherein the organic acid, or one of its derivatives, is caused to react in an organic medium either over a mixture of hydroxides of metals of the groups comprising iron, cobalt or nickel and the lanthanides, obtained by coprecipitation, or successively over the hydroxides of these metals obtained by separate precipitation.

11. A method for the preparation of mixed organometallic compositions comprising organic acid salts of at least one lanthanide and manganese, characterised in that the organic acid, or one of its derivatives, is caused to react successively over manganese hydroxide in an ammoniacal medium, then over lanthanide hydroxide.

12. A method according to Claim 11, characterised in that the total ratio of atoms of metal to the number of organic acid equivalents is between 2 and 8 and, preferably, between 2 and 4.

13. Mixed organo-metallic compositions comprising organic acid salts of at least one lanthanide and manganese, prepared by a method wherein the organic acid, or one of its derivatives, is caused to react over manganese hydroxide in an ammoniacal medium, then over lanthanide hydroxide.

14. Compositions obtained by a method according to one of Claims 7 to 9 and 11 to 13.

15. Application of the compositions according to one of Claims 1 to 6, 10, 13 and 14 as additives for propellants and fuels.

16. Application according to Claim 15, characterised in that the composition is used in a concentration of 10 to 100 ppm of metal.

**Patentansprüche**

1. Gemischte metallorganische Zusammensetzungen, dadurch gekennzeichnet, daß sie Salze organischer Säuren wenigstens eines Metalls der Lanthanidgruppe und wenigstens eines aus der aus Mangan, Eisen, Kobalt und Nickel gebildeten Gruppe ausgewählten Metalls enthalten und in welchen das Verhältnis der Gesamtzahl der Metallatome zur Zahl der Äquivalente an organischer Säure größer als der stöchiometrische Wert und vorzugsweise größer als 2 ist.

2. Zusammensetzungen nach Anspruch 1, dadurch gekennzeichnet, daß das Metall Eisen ist.

3. Zusammensetzungen nach Anspruch 1 oder 2, dadurch gekennzeichnet, daß das Metall der Lanthanidgruppe aus der aus Cer, Lanthan, Neodym und Praseodym gebildeten Gruppe ausgewählt ist.

4. Zusammensetzungen nach Anspruch 1, 2 oder 3, dadurch gekennzeichnet, daß das Metall der Lanthanidgruppe Cer ist.

5. Zusammensetzungen nach einem der Ansprüche 1 bis 4, dadurch gekennzeichnet, daß sie, bezogen auf das Gesamtgewicht der Metalle, 20 bis 85 Gew.-% an Metall aus der aus Eisen, Kobalt und Nickel gebildeten Gruppe und 80 bis 15 Gew.-% an Metall aus der Lanthanidgruppe enthalten.

6. Zusammensetzungen nach einem der Ansprüche 1 bis 5, dadurch gekennzeichnet, daß die organische Säure aus der aus den Fettsäuren mit mehr als 7 Kohlenstoffatomen, den Alkyl-, Aryl- oder Alkylarylsulfonsäuren und den Carbonsäuren mit Alkylarylkette mit mehr als 8 Kohlenstoffatomen bestehenden Gruppe ausgewählt sind.

7. Verfahren zur Herstellung gemischter metallorganischer Zusammensetzungen, welche Salze organischer Säuren von wenigstens einem Metall der aus Eisen, Kobalt und Nickel gebildeten Gruppe und von wenigstens einem Metall der Lanthanidgruppe umfassen, dadurch gekennzeichnet, daß man die organische Säure, oder eines ihrer Derivate, in organischem Milieu entweder mit einem durch gemeinsame Fällung erhaltenen Gemisch von Hydroxiden von Metallen der Eisen- und der Lanthanidgruppe oder nacheinander mit den durch getrennte Fällung enthaltenen Hydroxiden dieser Metalle umsetzt.

8. Verfahren nach Anspruch 7, dadurch gekennzeichnet, daß das Gesamtverhältnis von Metallatomen zur Zahl der Äquivalente von organischer Säure zwischen 3 und 9, vorzugsweise zwischen 3 und 6, liegt.

9. Verfahren nach einem der Ansprüche 7 und 8, dadurch gekennzeichnet, daß das Abtrennen des entstehenden Wassers aus dem Reaktionsgemisch durch Zufügen eines dritten Lösungsmittels, wie Glykol, eines Alkohols oder Alkylglykols, erleichtert wird.

10. Gemischte metallorganischer Zusammensetzungen, welche Salze organischer Säuren von wenigstens einem Metall aus der aus Eisen, Kobalt und Nickel gebildeten Gruppe und von wenigstens einem Metall der Lanthanidgruppe umfassen und durch ein Verfahren hergestellt werden, das darin besteht, in organischem Milieu die organische Säure, oder eines ihrer Derivate, entweder mit einem durch gemeinsame Fällung erhaltenen Gemisch von Hydroxiden der Metalle der aus Eisen, Kobalt und Nickel gebildeten Gruppe und der Lanthanidgruppe oder nacheinander mit den durch getrennte Fällung erhaltenen Hydroxiden dieser Metalle umsetzt.

11. Verfahren zur Herstellung von gemischten Metallorganischen Zusammensetzungen, welche Salze organischer Säuren von wenigstens einem Lanthanid und von Mangan, umfassen, dadurch gekennzeichnet, daß man nacheinander die organische Säure, oder eines ihrer Derivate, mit Manganhydroxid in ammoniakalischem Milieu, dann mit Lanthanidhydroxid umsetzt.

12. Verfahren nach Anspruch 11, dadurch gekennzeichnet, daß das Gesamtverhältnis von Metallatomen zur Anzahl der Äquivalente von organischer Säure zwischen 2 und 8, vorzugsweise zwischen 2 und 4, liegt.

13. Gemischte metallorganische Zusammensetzungen, welche Salze organischer Säuren von wenigstens einem Lanthanid und Mangan umfassen und durch ein Verfahren hergestellt werden, das darin besteht, daß man die organische Säure, oder eines ihrer Derivate, mit Manganhydroxid in ammoniakalischen Milieu und dann mit Lanthanidhydroxid umsetzt.

14. Zusammensetzungen, die durch ein Verfahren nach einem der Ansprüche 7 bis 9 und 11 bis 13 hergestellt sind.

15. Anwendung der Zusammensetzungen nach einem der Ansprüche 1 bis 6, 10, 13 und 14 als Brenn- oder Treibstoffzusätze.

16. Anwendung nach Anspruch 15, dadurch gekennzeichnet, daß die Zusammensetzung in einer Konzentration von 10 bis 100 ppm Metall verwendet wird.